# FASCICULE DE BREVET EUROPEEN

(11) **EP 4 348 985 B1**
(45) Date de publication et mention de la délivrance du brevet: **17.12.2025**
(21) Numéro de dépôt: 22732604.8
(22) Date de dépôt: 30.05.2022
(51) Int. Cl.: H04L 65/612, G06F 3/16, G10L 15/22

(54) **ÉQUIPEMENT ET PROCÉDÉ DE RESTITUTION DE CONTENU AUDIO DANS LE CADRE D'UN SERVICE NUMÉRIQUE INTERACTIF**
VORRICHTUNG UND VERFAHREN ZUR WIEDERGABE VON AUDIOINHALTEN ALS TEIL EINES INTERAKTIVEN DIGITALEN DIENSTES
APPARATUS AND METHOD FOR RENDERING AUDIO CONTENT AS PART OF AN INTERACTIVE DIGITAL SERVICE

(30) Priorité: 31.05.2021 FR 2105688
(43) Date de publication de la demande: 10.04.2024
(73) Titulaire: Orange, 92130 Issy-les-Moulineaux (FR)
(72) Inventeur: GUIONNET, Chantal, 92326 CHÂTILLON CEDEX (FR); LE GAC CESBRON, Sylvie, 92326 CHÂTILLON CEDEX (FR); CHEVALLIER, Sébastien, 92326 CHÂTILLON CEDEX (FR)
(74) Mandataire: Cabinet Beau de Loménie
(86) Numéro de dépôt international: PCT/FR2022/051008
(87) Numéro de publication internationale: WO 2022/254134

(56) Documents cités:
- US-A1- 2021 074 289

## Description

### Domaine Technique

L'invention se rapporte au domaine général des services numériques interactifs, et concerne plus particulièrement un procédé de restitution d'un contenu audio dans le cadre d'un service numérique interactif. L'invention concerne également un procédé de fourniture de contenu audio dans un service numérique interactif.

### Technique antérieure

L'accès à un contenu audio qui soit adapté à un utilisateur est un enjeu majeur. Une façon de répondre à cet enjeu est de faciliter la navigation dans un contenu audio. Pour cela, l'utilisateur dispose de fonctionnalités de base comme accéder au début du contenu audio, accéder à un chapitre particulier du contenu audio, parcourir le contenu audio ou encore faire une pause. Cependant, ces fonctionnalités ou ces modalités d'interaction avec un service numérique sont limitées puisqu'elles ne permettent pas à l'utilisateur d'obtenir facilement un contenu audio plus ou moins enrichi.

US 2021/0074289 décrit un système et un procédé de commande vocale d'un lecteur multimédia. Le procédé comprend la réception d'une instruction vocale, sa conversion en texte, sa transmission au lecteur et son exécution par ce dernier. Une instruction peut inclure la lecture d'un ensemble de pistes audio, et le lecteur lit l'ensemble dès réception de l'instruction.

Il serait donc avantageux que les services interactifs répondent, voire anticipent, les souhaits de l'utilisateur pour fournir à la demande un contenu plus ou moins enrichi correspondant aux souhaits de l'utilisateur. Lorsque ces services sont déployés sur des serveurs et accédés par des terminaux, ce critère d'adaptation en temps réel s'avère crucial pour le fournisseur de services et pour l'opérateur de télécommunications puisque si le contenu fourni répond plus précisément aux souhaits de l'utilisateur, les ressources du serveur seront également libérées plus rapidement, et le temps d'occupation du réseau de télécommunications sera plus réduit.

Une solution afin de déterminer les souhaits de l'utilisateur serait d'analyser les expressions verbales explicites de l'utilisateur, mais une telle solution serait excessivement complexe, gourmande en calcul, et pourrait engendrer une mauvaise interprétation des souhaits de l'utilisateur par le service.

L'invention vise notamment à pallier ces inconvénients.

### Exposé de l'invention

Selon un premier aspect, l'invention concerne un procédé de restitution de contenu audio dans le cadre d'un service numérique interactif, mis en œuvre par un dispositif électronique de restitution de contenu audio embarqué dans un équipement de restitution de contenu audio, le procédé comprenant, suite à l'obtention et restitution d'un contenu audio,
la détection d'une interaction physique entre un utilisateur et l'équipement de restitution ; et, en réponse à la détection,
la génération et la transmission d'une instruction à un dispositif de fourniture de contenu audio pour qu'il détermine au moins un paramètre de contexte d'utilisation de l'équipement de restitution pour obtenir un contenu audio suivant attendu par l'utilisateur dans le cadre du service numérique, le contenu audio suivant (F2) étant associé à un autre niveau d'information supérieur ou inférieur à celui du contenu audio (F1).

Avantageusement, la transmission de l'instruction discrète déclenche la restitution du contenu audio suivant.

Dans un mode de réalisation particulier, l'instruction est une instruction discrète choisie par le dispositif électronique de restitution de contenu audio et attendue par le dispositif de fourniture de contenu audio parmi un ensemble fini d'instructions prédéterminées. Ainsi, pour déterminer les souhaits de l'utilisateur en vue de lui fournir un contenu plus ou moins enrichi qui réponde à ses souhaits, l'invention prend le parti pris de déterminer un contenu audio adapté sur la base d'un ensemble limité d'instructions discrètes. À la différence d'une solution qui considérerait une analyse basée sur un traitement automatique du langage d'une description verbale de ces souhaits, l'invention présente l'avantage d'avoir une complexité faible.

De manière préférée, l'interaction avec l'équipement de restitution est générique, c'est-à-dire indépendante du type de service numérique, et simple de sorte à améliorer l'expérience utilisateur.

Dans un mode de réalisation particulier, le au moins un paramètre est un paramètre de contexte d'utilisation de l'équipement de restitution.

Par paramètres de contexte d'utilisation de l'équipement de restitution, on entend des paramètres propres à l'utilisateur de l'équipement de restitution, tel que sa langue, son âge, son niveau de connaissances, son humeur ou son état d'esprit ; et/ou des paramètres spécifiques à l'équipement de restitution tel que sa localisation géographique ou le moyen de restitution audio utilisé (e.g., des haut-parleurs ou des écouteurs) ; et/ou des paramètres caractérisant l'environnement dans lequel est utilisé l'équipement de restitution (e.g., un environnement bruyant, calme, bondé ou désert). Un contenu audio peut ainsi être adapté en fonction de ces paramètres, par exemple en ajoutant, supprimant ou remplaçant des portions du contenu audio, ou en appliquant une méthode de traitement d'un signal sonore au contenu audio.

Dans un mode de réalisation particulier, l'instruction est une instruction binaire.

Dans un mode de réalisation particulier, une information associée à l'instruction et représentant le contenu audio restitué au moment de l'interaction est transmise au dispositif électronique de fourniture de contenu audio.

De cette manière, le dispositif électronique de fourniture de contenu audio est en mesure de connaître l'état du service au moment de l'interaction, ce qui lui permet d'adapter au mieux le contenu audio suivant.

Dans un mode de réalisation particulier, la restitution du contenu audio est interrompue.

Si l'utilisateur interagit avec un équipement de restitution de contenu audio, par exemple son smartphone, en vue d'obtenir un contenu audio, cela signifie que le contenu du flux courant ne répond pas suffisamment à ses souhaits. Afin de créer une expérience utilisateur qui soit engageante, il peut donc être avantageux d'interrompre la restitution d'un contenu audio qui n'est pas adapté.

Dans un mode de réalisation particulier, le contenu audio est associé à un niveau d'information et de paramétrage, le contenu audio suivant étant associé à un autre niveau d'information supérieur ou inférieur à celui du contenu audio, dans lequel l'instruction est une instruction interprétée comme visant à obtenir un contenu d'un niveau d'information supérieur ou inférieur.

En interagissant avec un équipement de restitution, l'utilisateur exprime ainsi son souhait d'obtenir un contenu plus ou moins enrichi, et cette interaction est ensuite interprétée comme visant à obtenir un contenu d'un niveau d'information supérieur ou inférieur.

Au sens de l'invention, un contenu F2 est enrichi lorsqu'il prend en compte un nombre de paramètres de contexte d'utilisation de l'équipement de restitution supérieur au nombre de paramètres de contexte d'utilisation considéré pour générer le contenu F1, ou que la valeur d'au moins un des paramètres de contexte associés au contenu audio F2 caractérise un contexte plus précis que la valeur du même paramètre associé au contenu audio F1. A l'inverse, un contenu F2 est allégé lorsqu'il prend en compte un nombre de paramètres de contexte d'utilisation de l'équipement de restitution inférieur au nombre de paramètres de contexte d'utilisation considéré pour générer le contenu F1, ou que la valeur d'au moins un des paramètres de contexte associés au contenu audio F2 caractérise un contexte plus général que la valeur du même paramètre associé au contenu audio F1. Ainsi, le contenu audio F2 est associé à un autre niveau d'information respectivement supérieur ou inférieur à celui du contenu audio F1.

Dans un mode de réalisation particulier, un contenu F2 est enrichi lorsque la valeur d'au moins un des paramètres de contexte associés au contenu audio F2 est supérieure à la valeur du même paramètre associé au contenu audio F1. A l'inverse, un contenu F2 est allégé lorsque la valeur d'au moins un des paramètres de contexte associés au contenu audio F2 est inférieure à la valeur du même paramètre associé au contenu audio F1.

Dans un mode de réalisation particulier, le dispositif électronique de fourniture de contenu audio est embarqué dans un équipement de fourniture de contenu audio distinct de l'équipement de restitution de contenu audio, et dans ce cas, le contenu audio correspond à au moins un flux audio transmis par un canal de communication, et l'instruction est envoyée à l'équipement de fourniture de contenu audio par un canal de communication constitué par un parmi les canaux de communications suivants :
- le canal de communication par lequel est transmis le au moins un flux audio ;
- un canal de communication distinct du canal de communication par lequel est transmis le au moins un flux audio.

Selon un second aspect, l'invention concerne un équipement de restitution comprenant un dispositif électronique de restitution de contenu audio, le dispositif comprenant : un dispositif de restitution d'un contenu audio dans le cadre d'un service numérique interactif ; un détecteur d'une interaction entre un utilisateur et l'équipement de restitution ; un générateur configuré pour, sur détection de l'interaction, générer une instruction destinée à un dispositif électronique de fourniture de contenu audio pour qu'il détermine au moins un paramètre de contexte d'utilisation de l'équipement de restitution pour obtenir un contenu audio suivant dans le cadre dudit service, le contenu audio suivant étant associé à un autre niveau d'information supérieur ou inférieur à celui du contenu audio ; et, un transmetteur de l'instruction à destination dudit dispositif électronique de fourniture de contenu audio.

Dans un mode de réalisation particulier, l'équipement comprend au moins un bouton configuré pour générer un signal représentatif de l'activation dudit bouton, et des moyens d'acheminement dudit signal audit détecteur.

L'utilisation de boutons, préférentiellement deux, pour générer un signal représentatif du souhait ou du besoin de l'utilisateur permet d'obtenir une interface intuitive, conviviale et facile à utiliser, quel que soit le profil de l'utilisateur.

Selon un troisième aspect, l'invention concerne un procédé de fourniture de contenu audio dans le cadre d'un service numérique interactif, le procédé étant mis en œuvre par un dispositif électronique de fourniture de contenu audio, le procédé comprenant, suite à l'obtention d'un contenu courant généré à partir d'un ensemble de paramètres de contexte d'utilisation d'un équipement de restitution : la réception d'une instruction émise par un dispositif électronique de restitution de contenu audio pour obtenir un contenu audio suivant, le contenu audio suivant (F2) étant associé à un autre niveau d'information supérieur ou inférieur à celui du contenu audio (F1) ; l'obtention du contenu audio suivant dont au moins une partie prend en compte au moins un paramètre de contexte d'utilisation de l'équipement de restitution déterminé en fonction de l'instruction et de l'ensemble de paramètres de contexte d'au moins un contenu audio antérieur au contenu suivant ; et la transmission d'une donnée relative au contenu suivant à un dispositif électronique de restitution de contenu audio de l'équipement de restitution.

Dans un mode de réalisation particulier, le contenu suivant comporte au moins une partie non envoyée dudit contenu courant, et au moins une partie non comprise dans ledit contenu courant et obtenue conformément à l'étape d'obtention précitée.

De cette manière, le contenu qu'il était initialement prévu de restituer à l'utilisateur est adapté en prenant en compte des critères différents, de sorte à fournir un contenu qui réponde plus précisément aux souhaits de l'utilisateur.

Dans un mode de réalisation particulier, l'obtention dudit contenu suivant prend en compte un état dudit service au moment de l'interaction. En particulier, le dispositif électronique de fourniture de contenu audio peut déterminer l'instant restitué au moment de l'interaction, et ainsi en déduire la partie du flux courant qui n'a pas encore été restituée.

Dans un mode de réalisation particulier, une association est prédéterminée entre au moins une partie du flux courant et au moins une partie du contenu suivant obtenu conformément à ladite étape d'obtention précitée, en fonction de paramètres de contexte d'utilisation de l'équipement de restitution.

Dans un mode de réalisation particulier, une association entre au moins une partie du flux courant et au moins une partie du contenu suivant obtenu conformément à l'étape d'obtention précitée est déterminée en réponse à la réception de l'instruction.

Dans un mode de réalisation particulier, un contenu audio est associé à un contenu vidéo de telle sorte à former un contenu multimédia, et la réception d'une instruction déclenche l'obtention d'un contenu vidéo suivant synchronisé avec le contenu audio suivant.

Selon un quatrième aspect, l'invention concerne un dispositif électronique de fourniture de contenu audio dans le cadre un service numérique interactif comprenant : un récepteur d'une instruction émise par un dispositif électronique de restitution de contenu audio d'un équipement de restitution dans le cadre dudit service ; un dispositif d'obtention d'un contenu audio suivant destiné à être envoyé au dispositif électronique de restitution de contenu audio, au moins une partie dudit contenu audio suivant prenant en compte au moins un paramètre de contexte d'utilisation dudit équipement de restitution déterminé en fonction de l'instruction et de l'ensemble de paramètres de contexte d'un contenu antérieur audit contenu suivant, le contenu audio suivant (F2) étant associé à un autre niveau d'information supérieur ou inférieur à celui du contenu audio (F1) ; et un transmetteur d'une donnée relative au contenu suivant au dispositif électronique de restitution de contenu audio de l'équipement de restitution.

Dans un mode particulier de réalisation, les différentes étapes des procédés de restitution et de fourniture d'un contenu audio sont déterminées par des instructions de programmes d'ordinateurs.

En conséquence, l'invention vise aussi un programme d'ordinateur sur un support d'informations, ce programme étant susceptible d'être mis en œuvre dans un dispositif électronique de restitution d'un contenu audio, dans un dispositif électronique de fourniture d'un contenu audio, ou plus généralement dans un ordinateur, ce programme comportant des instructions adaptées à la mise en œuvre des étapes d'un procédé de de restitution et/ou de fourniture d'un contenu audio tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tels que mentionnés ci-dessus.

Le support d'informations ou d'enregistrement peut être n'importe quelle entité ou dispositif capable de stocker le programme. Par exemple, le support peut comporter un moyen de stockage, tel qu'une ROM (e.g., une PROM, EPROM, EEPROM), par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution d'un des procédés en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1 représente, de façon schématique, un exemple d'architecture d'un système dans lequel l'invention peut être mise en œuvre ;
[Fig. 2] La figure 2 représente, de manière schématique, un dispositif de restitution d'un contenu audio ou un dispositif de fourniture d'un contenu audio selon un exemple de mode de réalisation de l'invention ;
[Fig. 3] La figure 3 illustre un exemple d'une évolution des niveaux d'information souhaités par un utilisateur au cours du temps, qui résulte par exemple d'une mise en œuvre du procédé de la figure 4 ;
[Fig. 4] La figure 4 représente, sous forme d'organigramme, les principales étapes d'un procédé de gestion d'un flux audio par un équipement de restitution d'un contenu audio et un équipement de fourniture d'un flux audio dans le cadre d'un service numérique interactif ;
[Fig. 5] La figure 5 représente, sous forme d'organigramme, les principales étapes d'un procédé de gestion d'un flux audio par un équipement de restitution d'un contenu audio dans le cadre d'un service numérique interactif ; et,
[Fig. 6] La figure 6 représente, de manière schématique, un exemple de structuration d'un contenu audio selon différents niveaux d'information, en fonction de la valeur d'une instruction discrète.

### Description des modes de réalisation

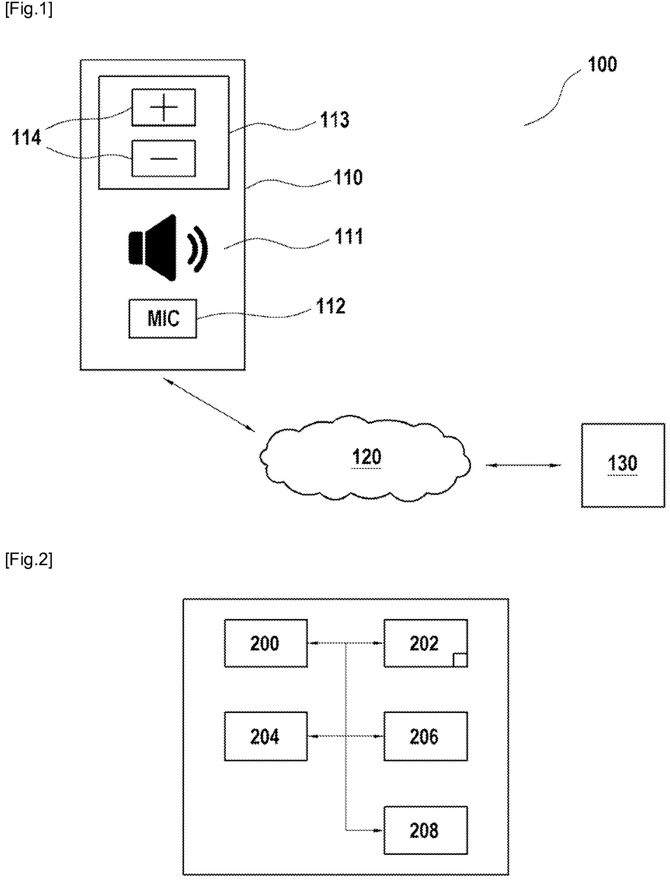

La **figure** 1 représente, de façon schématique, un exemple d'architecture d'un système dans lequel l'invention est mise en œuvre. Le système 100 comprend un équipement 110 de restitution d'un contenu audio dans le cadre d'un service numérique, qui est connecté à un réseau de télécommunications 120, par exemple un réseau radio, Internet, un réseau Wifi, un réseau Bluetooth, ou un réseau de téléphonie fixe ou mobile.

La **figure** 2 représente, de manière schématique, un exemple de dispositif électronique selon un mode de réalisation de l'invention. Le dispositif électronique présente l'architecture conventionnelle d'un ordinateur et est par exemple embarqué dans un équipement 110 de restitution d'un contenu audio. Il comprend notamment un processeur 200, une mémoire morte 202 (de type « ROM »), une mémoire non volatile réinscriptible 204 (de type « EEPROM » ou « Flash NAND » par exemple), une mémoire volatile réinscriptible 206 (de type « RAM »), et une interface de communication 208.

Dans cet exemple, la mémoire morte 202 constitue un support d'informations (ou d'enregistrement) conforme à un mode de réalisation particulier de l'invention. Dans la mémoire morte 202, est stocké un programme d'ordinateur P1 permettant au dispositif électronique de mettre en œuvre un procédé de restitution conforme à un exemple de mode de réalisation de l'invention. En variante, le programme d'ordinateur P1 est stocké dans la mémoire non volatile réinscriptible 204. Un programme d'ordinateur P2 peut également permettre à ce dispositif électronique de mettre en œuvre un procédé de fourniture d'un contenu audio dans le cadre d'un service numérique interactif. Ce programme P2 est par exemple stocké dans la mémoire morte 202, ou dans la mémoire non volatile réinscriptible 204.

L'équipement 110 de restitution comprend des moyens de réception d'un flux audio dans le cadre d'un service numérique, en particulier un décodeur de flux audio, et des moyens de restitution audio, tels que des haut-parleurs 111 ou une sortie audio (non représentée) de connexion pour des écouteurs.

L'équipement 110 comprend également des moyens de détection d'une interaction entre un utilisateur et l'équipement 110, tel qu'un module de détection (ou détecteur) associé à un microphone 112 et permettant de détecter une commande vocale émise par l'utilisateur, ou un module de détection associé à un bouton mécanique ou à un bouton d'une interface tactile 113. Le bouton est configuré pour générer un signal représentatif de l'activation du bouton, et le microphone est configuré pour générer un signal représentatif d'une commande vocale. Des moyens d'acheminement permettent de transmettre le signal représentatif au module de détection. De manière préférentielle, l'équipement 110 comprend deux boutons 114, l'un pour générer un signal caractérisant qu'un contenu audio enrichi est souhaité, l'autre pour générer un signal caractérisant qu'un contenu audio allégé est souhaité.

Enfin, l'équipement 110 comprend des moyens de génération (ou générateur) et de transmission (ou transmetteur) d'une instruction. Lorsque l'invention est mise en œuvre par un équipement 110 et un équipement 130 de fourniture, l'instruction peut être un code DTMF (pour « dual-tone multi-frequency » selon la terminologie anglo-saxonne) ou correspondre à un paquet de données transmis en vue d'obtenir un flux audio enrichi ou allégé. L'instruction peut être transmise via le réseau de télécommunications 120, en utilisant le même canal ou un canal distinct de celui utilisé pour recevoir le flux audio, ou via un autre réseau de télécommunications.

En outre, l'équipement de restitution peut également comprendre des moyens de restitution visuels, tels qu'un écran d'affichage et /ou une diode électroluminescente. En particulier, l'équipement 110 de restitution d'un service numérique audio peut être un terminal tel qu'un téléphone fixe ou mobile, un ordinateur, une tablette numérique, etc.

Un « service numérique audio » est constitué d'au moins un contenu audio qui est obtenu par l'équipement 110 de restitution, en vue d'être restitué par cet équipement 110. Il peut par exemple s'agir :
- d'un service de type « livre audio » pour lequel un texte dont on a enregistré la lecture à haute voix est restitué par l'équipement 110 ;
- d'un service de type « audioguide » qui permet à un utilisateur de l'équipement 110 de faire la visite guidée d'un site touristique, en utilisant son équipement 110 qui délivre des commentaires audio, comme le ferait un guide culturel ;
- d'un service de type « cours audio interactif » qui permet à un utilisateur de l'équipement 110 de se former en écoutant une ressource audio à vocation éducative ; ou,
- d'un service de type « assistant personnel » configuré pour répondre à des questions posées par un utilisateur.

Lorsque le dispositif électronique est configuré pour mettre en œuvre le procédé de fourniture, il comprend également des moyens de réception (ou récepteur) d'une instruction, des moyens d'obtention d'un contenu audio, et des moyens de transmission (ou transmetteur) d'une donnée relative au contenu suivant.

Le système comprend également un équipement 130 de fourniture de contenu audio dans le cadre d'un service numérique, qui est connecté au réseau de télécommunications 120. L'équipement 130 de fourniture comprend également un dispositif électronique qui présente l'architecture conventionnelle d'un ordinateur. Il peut alors comporter notamment un processeur 200, une mémoire morte 202 (de type « ROM »), une mémoire non volatile réinscriptible 204 (de type « EEPROM » ou « Flash NAND » par exemple), une mémoire volatile réinscriptible 206 (de type « RAM »), et une interface de communication 208.

Chaque mémoire morte peut constituer un support d'enregistrement conforme à un exemple de mode de réalisation de l'invention, lisible par le processeur associé et sur lequel est enregistré un programme d'ordinateur conforme à un exemple de mode de réalisation de l'invention. En variante, le programme d'ordinateur est stocké dans la mémoire non volatile réinscriptible associée. Le programme d'ordinateur peut permettre la mise en œuvre du procédé de fourniture conforme à un exemple de mode de réalisation de l'invention.

L'équipement 130 comprend des moyens de réception (ou récepteur) d'une instruction, des moyens d'obtention d'un contenu audio, et des moyens de transmission (ou transmetteur) d'un contenu suivant ou d'une donnée relative au contenu suivant. En outre, si l'instruction est un code DTMF émis par l'équipement 110 de restitution, l'équipement 130 est équipé d'un module de reconnaissance configuré pour reconnaitre différentes fréquences.

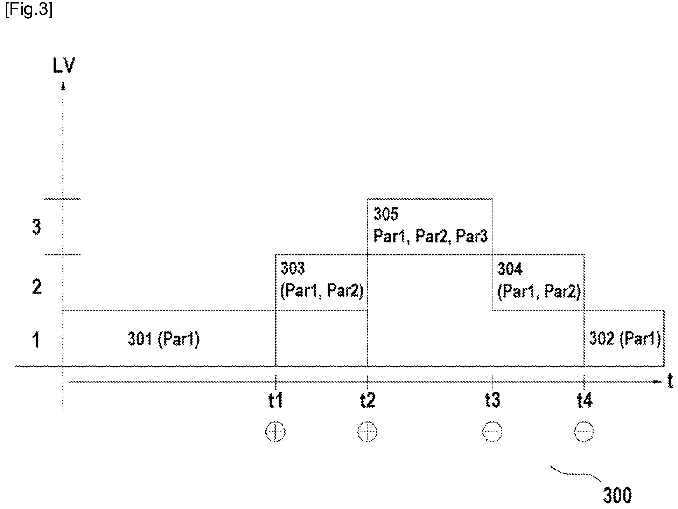

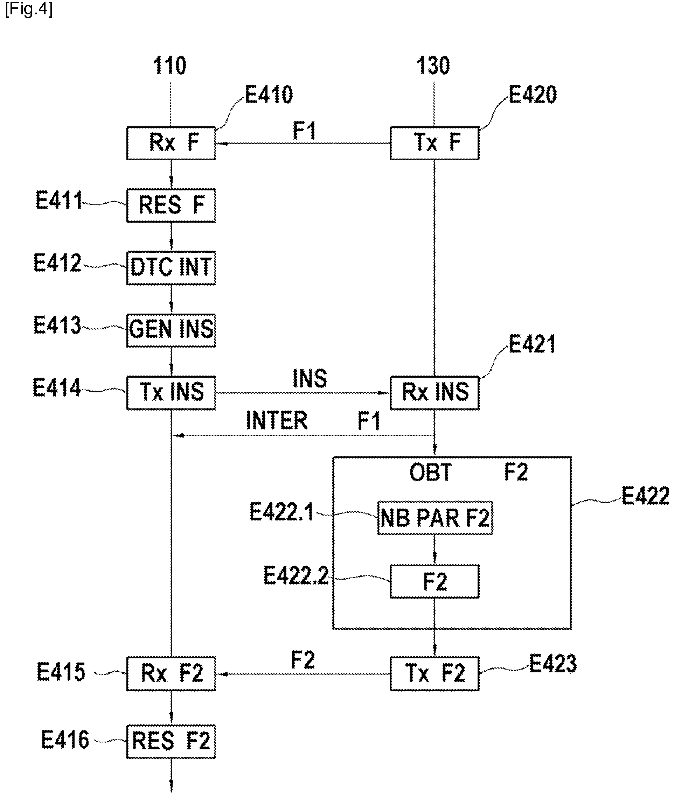

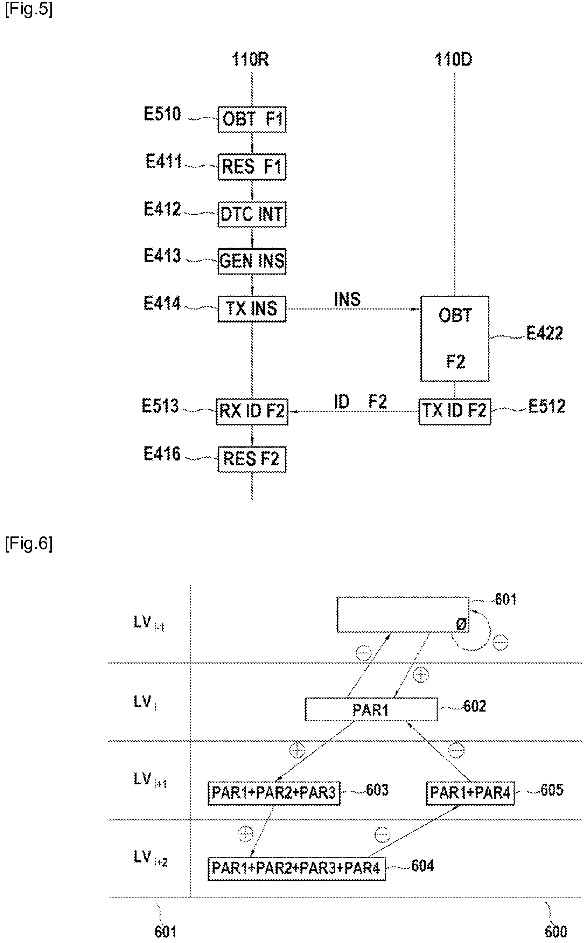

La **figure** 3 illustre un exemple d'une évolution des niveaux d'information et de paramétrage (LV) souhaités par un utilisateur en interaction avec un service numérique proposant du contenu audio, qui résulte par exemple d'une mise en œuvre du procédé de la figure 4 ou de la figure 5.

Le nombre de niveaux d'information et de paramétrage (LV) possibles dépend du type de service numérique interactif, et/ou de l'action en cours. L'action en cours correspond par exemple à une réponse à une question de l'utilisateur, une description pour configurer un matériel, une proposition spontanée du service, un commentaire sur une carte visualisée, ou un contenu tout public ou confidentiel.

Dans cet exemple, un utilisateur accède via son équipement 110 de restitution d'un contenu audio à un contenu audio initial 301 ayant un niveau d'information égal à 1. En variante, le contenu audio initial est associé à un niveau d'information (LV) supérieur (e.g., 2). Un paramètre de contexte d'utilisation Par1 de l'équipement 110 est appliqué par le service numérique interactif au contenu audio 301. Le contenu audio peut par exemple correspondre à un texte dont on a enregistré la lecture à haute voix, à une musique ou à un son.

À l'instant t1, l'utilisateur indique par un ordre représenté par un '+' qu'il souhaite obtenir un contenu enrichi, c'est-à-dire ici un contenu interprété par le dispositif de fourniture d'un contenu audio comme étant un contenu de niveau 2.

Ainsi, un contenu audio F1 est par exemple enrichi lorsqu'en réponse à l'application ou pas de paramètres de contexte, des portions supplémentaires PS de contenu audio sont ajoutées au contenu audio F1, ou remplacent certaines portions ou l'ensemble du contenu audio F1, de telle sorte à former un contenu audio F2. Dans un exemple particulier, un contenu audio F1 correspondant à un texte dont on a enregistré la lecture à haute voix est enrichi lorsque de nouvelles portions audio, dont le contenu correspond par exemple également à un texte dont on a enregistré la lecture à haute voix, sont ajoutées au contenu audio F1. C'est par exemple le cas lorsque des exemples supplémentaires ou des détails sont ajoutés au contenu F1, ou lorsque certaines phrases du texte initial sont répétées. Alternativement, le contenu F1 peut être enrichi en y ajoutant des pauses, des sons ou de la musique à certains instants.

Selon un autre exemple particulier, un contenu audio F1 comprend un bruit de fond qui rend difficile la compréhension d'un texte dont on a enregistré la lecture à haute voix. Grâce à la prise en compte de paramètres de contexte supplémentaires (qui caractérisent par exemple le fait que le contenu est écouté par un utilisateur ayant un déficit auditif), un contenu enrichi F2 peut être généré qui correspond au texte du contenu audio F2, mais sur lequel a été appliqué un traitement de réduction de bruit. Autrement dit, le contenu audio F2 est enrichi, mais comprend moins d'information que n'en comprend le contenu audio F1.

Selon un autre exemple particulier, un contenu audio initial F1 est par exemple adapté à un élève de primaire. En choisissant d'obtenir un contenu audio enrichi, un nouveau paramètre de contexte qui correspond par exemple au fait que l'élève est en maternelle est appliqué, et certaines portions du contenu audio F1, qui n'ont pas encore été restituées et qui sont considérées comme inadaptées compte tenu du niveau de l'élève, sont supprimées. Autrement dit, le contenu audio F2 est enrichi par l'application d'un paramètre supplémentaire, et il comprend des informations différentes, plus adaptées au contexte. Mais dans cet exemple, le contenu enrichi F2 est plus court que le contenu F1.

Cette opération peut être réitérée plusieurs fois (ici aux instants t1 et t2) afin d'obtenir à chaque fois un contenu audio qui soit plus enrichi que celui restitué par l'équipement 110 de restitution au moment où l'ordre est indiqué. Ainsi, entre les instants t1 et t2, un contenu 303 interprété comme étant de niveau 2 et sur lequel sont appliqués par exemple deux paramètres Par1 et Par2 de contexte d'utilisation de l'équipement 110 est restitué. Entre les instants t2 et t3, un contenu 305 interprété comme étant de niveau 3 et sur lequel sont appliquées trois paramètres Par1, Par2 et Par3 de contexte d'utilisation est restitué.

À l'inverse, l'utilisateur peut souhaiter obtenir un contenu allégé. Dans un exemple particulier, un contenu audio F1 correspondant à un texte dont on a enregistré la lecture à haute voix est allégé lorsque certaines portions audio du contenu audio F1 sont supprimées.

Selon un autre exemple particulier, un contenu audio initial F1 est par exemple adapté à un élève de maternelle. En choisissant d'obtenir un contenu audio allégé, un paramètre de contexte jusqu'à présent appliqué et qui caractérisait le niveau de l'utilisateur ne l'est plus par le service, et de nouvelles portions sont ajoutées au contenu audio F1, de sorte à générer un contenu audio F2 ayant un niveau de base par exemple adapté à un élève de primaire. Ainsi, dans cet exemple, le contenu F2 allégé obtenu est plus long que le contenu F1.

Aux instants t3 et t4, l'utilisateur indique par un ordre représenté par un '-' qu'il souhaite obtenir un contenu allégé, c'est-à-dire un contenu interprété comme étant d'un niveau inférieur à celui du contenu actuellement restitué. Ainsi, entre les instants t3 et t4, un contenu 304 de niveau 2 sur lequel sont appliqués les deux paramètres Par1 et Par2 de contexte d'utilisation de l'équipement 110 est restitué. Puis à partir de l'instant t4, un contenu 302 ayant contenu de niveau 1 et sur lequel est appliqué le paramètre Par1 de contexte d'utilisation de l'équipement 110 est restitué.

Selon un mode de réalisation particulier, le contenu 302 correspond en quelque sorte à la suite du contenu 301 qu'il était prévu de restituer immédiatement après que la portion 301 l'ait été, mais qui n'avait finalement pas été restituée à l'utilisateur après la détection d'une interaction à l'instant t1. De la même manière, le contenu 304 correspond en quelque sorte à la suite du contenu 303 qu'il était prévu de restituer immédiatement après que le contenu 303 l'ait été, mais qui n'avait finalement pas été restituée à l'utilisateur après la détection d'une interaction à l'instant t2.

En variante, le contenu 302 ne correspond pas exactement à la suite du contenu 301 qu'il était prévu de restituer immédiatement après que le contenu 301 l'ait été. Dans ce cas, le contenu 302 restitué à partir de l'instant t4 prend par exemple en compte l'historique des actions réalisées par l'utilisateur aux instants t1 à t4. Si le paramètre Par1 correspond par exemple à la valeur d'un niveau de connaissances de l'utilisateur, ce niveau de connaissance peut être régulièrement mis-à-jour, par exemple après qu'une interaction avec un utilisateur de l'équipement 110 est détectée. Dans ce cas, la valeur du paramètre Par1 associé au contenu 301 n'est pas identique à celle du paramètre Par1 associé au contenu 302.

En variante, le nombre de paramètres appliqués entre deux intervalles de temps consécutifs (par exemple entre les intervalles [t1, t2] et [t2, t3]) est identique, mais la valeur d'au moins un des paramètres appliqués évolue. C'est par exemple le cas lorsqu'un utilisateur souhaite, par ses actions, amplifier ou réduire un même phénomène d'adaptation (e.g., un niveau de connaissances).

L'ordre de passage vers un contenu enrichi ou allégé peut être indiqué par l'utilisateur en considérant l'une des modalités suivantes :
- par appui sur un bouton de l'équipement 110 de restitution d'un contenu audio ou d'une télécommande associée à l'équipement 110. Le bouton peut être soit un bouton poussoir, soit un bouton d'une interface tactile 113. De manière préférée, l'équipement 110 de restitution comprend deux boutons 114, l'un pour générer un signal caractérisant qu'un contenu enrichi est souhaité, l'autre pour générer un signal caractérisant qu'un contenu allégé est souhaité.
- par une commande vocale élémentaire (par exemple un unique mot ou un nombre de mots limité) émise par l'utilisateur. Un microphone 112 de l'équipement 110 est associé à un module de détection qui décode et analyse le signal audio reçu. L'instruction de l'utilisateur est ensuite déterminée en comparant le signal reçu à d'autres signaux de base enregistrés en mémoire de l'équipement 110, ces signaux de base étant associés à une information indiquant si un contenu enrichi ou allégé est souhaité.
- par un mouvement spécifique de l'équipement 110 ou de l'utilisateur détecté par un capteur (non représenté), par exemple une caméra ou un gyroscope embarqué dans l'équipement 110 de restitution. Un module de détection est couplé à ce capteur qui analyse le mouvement détecté et génère un signal. L'instruction de l'utilisateur est ensuite déterminée en comparant le signal à d'autres signaux de base enregistrés en mémoire de l'équipement 110, ces signaux de base étant associés à une information indiquant si un contenu enrichi ou allégé est souhaité.

Selon un mode de réalisation particulier, en réponse à la restitution d'un contenu audio enrichi ou allégé, également appelé contenu suivant, une information d'acquittement est générée par l'équipement 110 de restitution. Cette information d'acquittement est par exemple générée en réponse à l'obtention du contenu suivant, et permet à l'utilisateur d'être informé de la prise en compte de son souhait de nouveau contenu.

Ainsi, l'utilisateur peut être informé de la réception d'un contenu suivant par différentes modalités :
- par des moyens de restitution visuels de l'équipement 110 de restitution, tels qu'un écran d'affichage affichant par exemple temporairement une information visuelle caractérisant la restitution d'un contenu suivant, ou affichant le niveau d'information correspondant au contenu suivant restitué. Le niveau d'information dépend par exemple du nombre de paramètres ou des valeurs de paramètres de contexte pris en compte par le service. En variante, ces moyens comprennent une diode électroluminescente de l'équipement 110 de restitution qui s'allume temporairement en cas de restitution d'un contenu suivant, ou dont l'intensité lumineuse varie en fonction du niveau d'information du contenu restitué.
- par des moyens de génération d'une information sonore. Un bip sonore est par exemple temporairement émis en cas de restitution d'un contenu suivant. Le bip sonore peut également permettre à l'utilisateur d'identifier le niveau d'information du contenu suivant, par exemple en adaptant la durée du bip en fonction du niveau ou en émettant plusieurs bip sonores consécutifs dont le nombre dépend du niveau d'information du contenu suivant. En variante, des bips de sonorités différentes peuvent être générés qui caractérisent si le contenu suivant est enrichi ou allégé par rapport au contenu initial. En variante, une indication verbale qui indique qu'un contenu suivant est sur le point d'être restitué, voire qui précise le niveau d'information du contenu sur le point d'être restitué, est restituée juste avant que le contenu suivant ne soit restitué.

En variante, lorsque l'invention est mise en œuvre par un équipement 110 de restitution et un équipement 130 de fourniture d'un contenu audio, l'information d'acquittement peut être une information sonore qui est générée par l'équipement 130 de fourniture, et transmise soit en utilisant le même canal de communication que celui utilisé pour transmettre le contenu enrichi ou allégé à l'équipement 110 de restitution, soit en utilisant un autre canal de communication. Comme précédemment, l'information sonore peut être un bip sonore ou une séquence de bips sonores dont la fréquence et/ou la durée peuvent varier, ou une indication verbale qui indique qu'un contenu suivant est sur le point d'être restitué, voire qui précise le niveau du contenu suivant.

La **figure 4** représente, sous forme d'organigramme, les principales étapes d'un procédé de gestion d'un contenu audio par un équipement 110 de restitution et un équipement 130 de fourniture d'un contenu audio dans le cadre d'un service numérique interactif. Ce procédé est typiquement mis en œuvre lorsque l'utilisateur d'un équipement 110 de restitution souhaite obtenir un contenu audio dans le cadre d'un service numérique, dont le contenu s'adapte en réponse à une instruction de l'utilisateur et en fonction de paramètres de contexte d'utilisation de l'équipement 110 de restitution. Le contenu audio souhaité est typiquement géré par un fournisseur de services en charge de la gestion d'un équipement 130 de fourniture d'un contenu audio. Dans ce contexte, un contenu audio est également appelé « flux audio ».

Dans une telle situation, l'utilisateur de l'équipement devrait tout d'abord s'identifier ou s'authentifier auprès du fournisseur de services numériques audio chargé de gérer l'équipement 130 de fourniture d'un flux audio. Si le fournisseur propose plusieurs services audio numériques, l'utilisateur sélectionne l'un d'entre eux, par exemple au travers de l'écran tactile de l'équipement 110 de restitution.

Un flux F1 généré par un équipement 130 de fourniture d'un flux audio est transmis (E420) puis reçu par un équipement 110 lors d'une première étape E410 et restitué à l'utilisateur de l'équipement 110 lors d'une étape E411. Au cours ou à l'issue de la restitution du flux F1, l'équipement 110 détecte une interaction physique E412 avec un utilisateur.

Comme indiqué en référence à la figure 3, l'interaction détectée peut correspondre :
- à l'appui sur un bouton de l'équipement 110 ou d'une télécommande associée à l'équipement 110 ;
- à une commande vocale élémentaire émise par l'utilisateur ;
- ou à un mouvement spécifique de l'utilisateur qui est détecté par un capteur associé à l'équipement 110 ;
Une fois l'interaction détectée, l'équipement 110 peut alors déterminer, par exemple à l'aide d'un module de détection et d'analyse, si l'interaction vise à obtenir un contenu enrichi (e.g., un contenu interprété par l'équipement 130 de fourniture comme étant d'un niveau supérieur à celui du flux actuellement restitué) ou allégé (e.g., un contenu interprété par l'équipement 130 de fourniture comme étant d'un niveau inférieur) par rapport au contenu du flux F1. Ensuite, l'équipement 110 de restitution génère, lors d'une étape E413, une instruction qui est envoyée à l'équipement 130 de fourniture d'un flux audio lors d'une étape E414.

Dans un mode de réalisation particulier, l'instruction est une instruction discrète choisie par le dispositif électronique de restitution de contenu audio et attendue par le dispositif de fourniture de contenu audio parmi un ensemble fini d'instructions prédéterminées. Lorsque ce nombre est égal à 2, l'instruction discrète est dite binaire. Dans cet exemple, l'instruction INS est une instruction binaire qui caractérise si le flux souhaité est un flux audio enrichi ou allégé.

L'instruction est transmise à l'équipement 130 soit par le même canal de communication que celui utilisé pour recevoir le flux F1 lors de l'étape E410, soit par un autre canal de communication. Plus particulièrement, l'instruction peut être un code DTMF (pour « dual-tone multi-frequency » selon la terminologie anglo-saxonne), et dans ce cas l'information selon laquelle un contenu enrichi ou allégé est souhaité est codée sous la forme d'un signal audio à différentes fréquences. En variante, un message est envoyé à l'équipement 130 qui peut correspondre à un paquet de données par exemple conforme au protocole IP, et qui inclus un paramètre dont la valeur permet d'identifier si un contenu enrichi ou allégé est souhaité.

En réponse à la réception d'une instruction lors d'une étape E421, l'équipement 130 de fourniture détermine si l'instruction est obtenue en vue d'obtenir un contenu enrichi ou allégé. De manière optionnelle, la valeur d'au moins un paramètre de contexte qui considère l'historique des flux restitués par l'équipement et/ou l'historique des interactions est mise à jour. Ce paramètre représente par exemple un niveau de connaissances de l'utilisateur.

Ensuite, lors d'une étape E422, l'équipement 130 de fourniture obtient un flux suivant F2 au contenu enrichi ou allégé par rapport à celui de F1, et qui vise à anticiper le souhait de l'utilisateur. Pour cela, l'équipement 130 consulte une structure de données associée au service numérique audio et qui est par exemple stockée dans la mémoire non volatile réinscriptible 204. Cette structure de données associe une première information d'identification d'un flux enrichi et/ou une seconde information d'identification d'un flux allégé à un flux courant correspondant à un niveau d'information (LVi). Ces flux enrichi et allégé résultent par exemple de l'application d'une liste de paramètres auxquels sont associés des valeurs à un contenu audio de référence. Le flux est par exemple également stocké dans la mémoire non volatile réinscriptible 204, et peut avoir été généré préalablement par le dispositif 130 ou obtenu d'un autre dispositif de fourniture d'un contenu audio.

Dans un mode de réalisation particulier, le flux suivant F2 est généré à la volée. Si l'instruction reçue à l'étape E421 est obtenue en vue d'obtenir un contenu enrichi, l'équipement 130 détermine, en fonction du niveau d'information (LVi) du flux restitué F1, des paramètres et des valeurs de ces paramètres appliqués au flux F1, une liste de paramètres supplémentaires devant être appliqués au flux F1 (E422.1), de telle sorte à obtenir un flux F2 enrichi (E422.2) qui est interprété par le dispositif 130 de fourniture comme appartenant à un niveau d'information supérieur (LVi+1). En variante, l'équipement 130 met à jour la valeur d'au moins un des paramètres de contexte associés au contenu audio F1, cette valeur mise-à-jour caractérisant un contexte plus précis que la valeur du même paramètre associé au contenu audio F1. De manière similaire, si l'instruction reçue à l'étape E421 est obtenue en vue d'obtenir un contenu allégé, l'équipement 130 détermine, en fonction du niveau d'information (LVi) du flux restitué, des paramètres appliqués au flux F1 et des valeurs de ces paramètres, une liste de paramètres devant être appliqués au flux F1 (E422.2) dont le nombre est inférieur à celui des paramètres jusqu'à présent appliqués au flux F1 de telle sorte à obtenir un flux F2 allégé et interprété par le dispositif 130 de fourniture comme appartenant à un niveau d'information inférieur (LVi-1). En variante, l'équipement 130 met à jour la valeur d'au moins un des paramètres de contexte associés au contenu audio F1, cette valeur mise-à-jour caractérisant un contexte plus allégé que la valeur du même paramètre associé au contenu audio F1.

Dans ce cas, de manière optionnelle, un message d'interruption INTER_F visant à interrompre la restitution du flux courant est transmis par l'équipement 130 de fourniture à l'équipement 110.

Dans un mode de réalisation particulier, l'application de paramètres de contexte à un flux F1, que ce soit en vue d'obtenir un flux suivant F2 enrichi ou allégé, engendre l'ajout ou la suppression d'au moins une portion supplémentaire de contenu audio à la partie PF1 du flux courant F1 qui n'a pas encore été restituée.

Pour cela, de manière optionnelle, l'équipement 130 détermine l'instant restitué Tr au moment de la détection de l'interaction, et en déduit quelle partie PF1 du flux courant F1 n'a pas encore été restituée. Cette partie PF1 est par exemple déterminée en fonction du temps Tc de détection de l'interaction, du temps de transmission du flux courant entre les équipements 110 et 130, du temps entre la réception du flux courant et sa restitution par l'équipement 130, et du temps de transmission et d'analyse de l'instruction discrète. En variante, la partie PF1 est déduite d'une information transmise par l'équipement 110 de réception. Cette information correspond par exemple à l'instant de restitution du flux lorsque l'instruction de l'utilisateur a été détectée. Elle peut être transmise en parallèle de l'instruction transmise à l'étape E414, à l'aide d'un message conforme au protocole IP. Une fois la partie PF1 déterminée, l'équipement 130 de fourniture détermine par exemple quel contenu audio doit être ajouté ou supprimé de la partie PF1.

En variante, en réponse à la réception d'une instruction à l'étape E421, l'équipement 130 adapte le flux audio non transmis, sans déterminer l'instant restitué au moment de la détection de l'interaction. Dans ce cas l'instant Tr ci-après correspond au temps courant. Cette variante est particulièrement avantageuse lorsque le volume de données stockées par l'équipement 110 avant d'être restitué est faible.

Si l'instruction reçue à l'étape E421 est obtenue en vue d'obtenir un contenu enrichi dans lequel une portion supplémentaire de contenu audio est ajoutée, il consulte une première table d'association TAB1 qui associe à un niveau d'information donné (LVi), au moins une portion supplémentaire PS devant être ajoutée au flux de niveau inférieur (LVi-1), et qui comprend également une information permettant de déterminer sa position dans le flux. En fonction de l'information de position associée à chaque portion PS, et du temps Tr, l'équipement 130 de fourniture détermine la ou les portions supplémentaires PS devant être ajoutées ou remplaçant d'autres portions du flux de niveau inférieur (LVi-1). La position à laquelle chaque portion supplémentaire PS doit être insérée dans le flux audio est prédéterminée, par exemple en fonction du type de service. Ainsi, un flux suivant F2 est généré qui résulte de l'ajout d'au moins une portion supplémentaire PS au flux F1.

De manière similaire, si l'instruction reçue à l'étape E421 est obtenue en vue d'obtenir un contenu allégé dans lequel une portion supplémentaire de contenu audio est supprimée, il consulte une seconde table d'association TAB2 qui associe à un niveau d'information donné (LVi), au moins une portion PS qui doit être supprimée de la partie du flux courant non restituée, et une information permettant d'identifier la position de cette portion PS dans la partie du flux non restituée. En fonction de l'information de position associée à chaque portion PS, et du temps Tr, l'équipement 130 de fourniture détermine la ou les portions supplémentaires PS devant être supprimées ou remplaçant d'autres portions du flux de niveau supérieur (LVi+1). Ainsi, un flux suivant F2 est généré qui résulte de la suppression d'au moins une portion supplémentaire PS du flux F1. Enfin, lors d'une étape E423, le flux suivant est transmis par l'équipement 130 de fourniture à l'équipement 110 de restitution, et reçu, lors d'une étape E415, par l'équipement 110 de restitution. Une fois reçu, le flux suivant peut être enregistré dans une mémoire non volatile réinscriptible 204, et/ou restitué par l'équipement 110 de restitution (E416).

La **figure 5** représente, sous forme d'organigramme, les principales étapes d'un procédé de gestion d'un contenu audio par un équipement 110 de restitution de contenu dans le cadre d'un service numérique interactif. À la différence du procédé illustré en figure 4, le procédé de la figure 5 est uniquement mis en œuvre par un équipement 110 de restitution, tel qu'un terminal, qui comprend à la fois un dispositif électronique 110R de restitution de contenu audio, et un dispositif 110D de fourniture de contenu audio. Les étapes qui portent la même référence qu'une étape décrite en référence à la figure 4 sont identiques, et ne donc pas détaillées ci-après.

Dans cet exemple, un contenu audio F1 qui était préalablement stocké dans une mémoire non volatile réinscriptible 204 de l'équipement 110 est obtenu par dispositif électronique 110R lors d'une étape E510, puis restitué à l'utilisateur de l'équipement 110 lors d'une étape E411. Au cours ou à l'issue de la restitution du contenu audio F1, l'équipement 110 détecte une interaction avec un utilisateur (E412), puis génère, lors d'une étape E413, une instruction (INS) qui est envoyée lors d'une étape E414 au dispositif 110D de fourniture de contenu audio. Lors d'une étape référencée E422, le dispositif 110D de fourniture de contenu audio obtient un contenu suivant F2.

Lors d'une étape E512, le dispositif 110D de fourniture de contenu audio transmet une donnée permettant de récupérer le contenu suivant, par exemple un identifiant, ou une adresse de la mémoire non-volatile réinscriptible, qui est reçue par le dispositif 110R lors d'une étape E513.

Une fois la donnée reçue, le contenu suivant peut être restitué par l'équipement 110 de restitution lors d'une étape E416.

En référence à l'une des figures 4 ou 5, dans un mode de réalisation particulier, au moins un des paramètres de contexte appliqués (par exemple Par1) est un paramètre de codage, dont la valeur dépend du niveau d'information associé au flux suivant. Ce paramètre de codage correspond par exemple à l'application d'une fréquence sur le signal audio correspondant au flux suivant. Ainsi, si plus le contenu audio est interprété comme appartenant à un niveau d'information élevé, plus une fréquence haute est appliquée au signal audio correspondant, et si de la même manière plus le contenu audio est interprété comme appartenant à un niveau d'information faible, plus une fréquence basse est appliquée sur le signal audio correspondant, un texte dont on a enregistré la lecture à haute voix est restitué à l'utilisateur avec une voix plus ou moins aigüe, en fonction du niveau d'information de ce contenu. Dans le cas particulier où le paramètre de contexte est un paramètre de codage, il peut être appliqué par le dispositif de fourniture de contenu audio au cours de l'étape E422, ou appliqué par le dispositif de restitution de contenu audio lors ou juste avant l'étape E416.

La **figure 6** représente, de manière schématique, un exemple de structuration 600 d'un contenu audio selon différents niveaux d'informations, en fonction d'une valeur d'une instruction discrète. Comme indiqué en référence aux figures 4 et 5, cette structuration est parcourue par le dispositif (110D, 130) de fourniture de contenu pour déterminer les paramètres à appliquer lorsqu'un contenu d'un niveau d'information différent de celui du contenu courant doit être généré.

Dans cet exemple, la référence 602 représente un contenu initial correspondant à un contenu 601 sur lequel est appliqué un paramètre de contexte PAR1, qui est associé à un niveau d'information initial LVi. Si ce contenu 602 est restitué lorsqu'une instruction est reçue à l'étape E421 est obtenue en vue d'obtenir un contenu enrichi (+), deux nouveaux paramètres PAR2 et PAR3 sont appliqués au contenu 602, de telle sorte qu'un contenu 603 est généré. Ce contenu 603 est associé à un niveau d'information LVi+1. Si par contre, l'instruction reçue à l'étape E421 est obtenue en vue d'obtenir un contenu allégé (-), un contenu 601 sur lequel aucun paramètre de contexte n'est appliqué est généré. Ce contenu 601 est associé à un niveau d'information LVi-1.

Si le contenu 603 est restitué lorsqu'une instruction reçue à l'étape E421 est obtenue en vue d'obtenir un contenu enrichi (+), un nouveau contenu 604 est généré qui correspond au contenu 603 sur lequel est appliqué un paramètre de contexte supplémentaire PAR4. Ce contenu 604 est associé à un niveau d'information LVi+2.

Si le contenu 604 est restitué lorsqu'une instruction reçue à l'étape E421 est obtenue en vue d'obtenir un contenu allégé (-), un nouveau contenu 605 est généré qui correspond au contenu 604 sur lequel deux paramètres de contexte PAR2 et PAR3 ne sont plus appliqués. Ce contenu 605 est associé à un niveau d'information LVi+1.

Enfin, Si le contenu 605 est restitué lorsqu'une instruction reçue à l'étape E421 est obtenue en vue d'obtenir un contenu allégé (-), ceci revient à générer le contenu 602 associé au niveau d'information LVi.

Dans un mode particulier de l'invention, le contenu audio est associé à un contenu vidéo. Le contenu vidéo est synchronisé avec le contenu audio, et le contenu vidéo est par exemple décodé de telle sorte à obtenir une séquence vidéo qui est affichée sur l'écran de l'équipement 110 de restitution. Dans ce cas, une interaction d'un utilisateur en vue d'obtenir un contenu audio plus ou moins enrichi entraîne également une adaptation de la séquence vidéo. Ainsi, si l'instruction reçue à l'étape E421 est obtenue en vue d'obtenir un contenu audio enrichi, ceci entraîne par exemple automatiquement la lecture d'une nouvelle séquence vidéo associée à une région d'intérêt qui était visualisée au moment de l'interaction, ou un zoom de l'information visuelle. Autrement dit, un enrichissement par un « zoom » sur un contenu audio entraîne automatiquement un « zoom » de l'information visualisée. De manière optionnelle, des sauts peuvent également être réalisés dans le contenu vidéo qu'il était initialement prévu d'afficher, et certaines portions du contenu vidéo ne sont donc pas présentées à l'utilisateur.

De manière similaire, si l'instruction reçue à l'étape E421 est obtenue en vue d'obtenir un contenu audio allégé, ceci entraîne par exemple automatiquement la lecture d'une nouvelle séquence vidéo associée la portion de vidéo qui était visualisée au moment de l'interaction ou un dé-zoom de l'information visuelle. Autrement dit, lorsque le flux audio est allégé en supprimant certaines portions, ce « dé-zoom» sur le flux audio entraîne automatiquement un « dé-zoom» de l'information visualisée. De manière optionnelle, des sauts peuvent également être réalisés dans le contenu vidéo qu'il était initialement prévu d'afficher, et certaines portions du contenu vidéo peuvent être une nouvelle fois représentées à l'utilisateur.

## Revendications

1. Procédé de restitution de contenu audio dans le cadre d'un service numérique interactif, mis en œuvre par un dispositif électronique de restitution de contenu audio embarqué dans un équipement (110) de restitution de contenu audio, le procédé comprenant, suite à l'obtention et restitution d'un contenu audio (F1),
la détection (E412) d'une interaction physique entre un utilisateur et l'équipement de restitution; et, en réponse à la détection,
la génération (E413) et la transmission (E414) d'une instruction (ins) à un dispositif électronique (130, 110D) de fourniture de contenu audio pour qu'il détermine au moins un paramètre de contexte d'utilisation de l'équipement de restitution pour obtenir un contenu audio suivant (F2)
attendu par l'utilisateur dans le cadre du service numérique, la transmission de l'instruction discrète déclenchant la restitution (E416) du contenu audio suivant (F2), le contenu audio suivant (F2) étant associé à un autre niveau d'information supérieur ou inférieur à celui du contenu audio (F1).

2. Procédé de restitution selon la revendication 1, dans lequel l'instruction (ins) est une instruction binaire.

3. Procédé de restitution selon l'une quelconque des revendications 1 à 2, comprenant en outre la transmission au dispositif électronique de fourniture de contenu audio d'une information associée à l'instruction (ins) et représentant le contenu audio (F1) restitué au moment de l'interaction.

4. Procédé de restitution selon l'une quelconque des revendications 2 à 3, dans lequel le contenu audio (F1) est associé à un niveau d'information et de paramétrage (LV), le contenu audio suivant (F2) étant associé à un autre niveau d'information supérieur ou inférieur à celui du contenu audio (F1), dans lequel l'instruction (ins) est une instruction interprétée comme visant à obtenir un contenu d'un niveau d'information supérieur ou inférieur.

5. Équipement de restitution comprenant un dispositif électronique de restitution de contenu audio, le dispositif comprenant :
un dispositif de restitution d'un contenu audio dans le cadre d'un service numérique interactif ;
un détecteur d'une interaction entre un utilisateur et l'équipement de restitution ;
un générateur configuré pour, sur détection de l'interaction, générer une instruction destinée à un dispositif électronique de fourniture de contenu audio pour qu'il détermine au moins paramètre de contexte d'utilisation de l'équipement de restitution pour obtenir un contenu audio suivant dans le cadre dudit service, le contenu audio suivant étant associé à un autre niveau d'information supérieur ou inférieur à celui du contenu audio ; et,
un transmetteur de l'instruction à destination dudit dispositif électronique de fourniture de contenu audio.

6. Équipement de restitution selon la revendication 5 comprenant au moins un bouton configuré pour générer un signal représentatif de l'activation dudit bouton, et des moyens d'acheminement dudit signal audit détecteur.

7. Procédé de fourniture de contenu audio dans le cadre d'un service numérique interactif, le procédé étant mis en œuvre par un dispositif électronique de fourniture de contenu audio, le procédé comprenant, suite à l'obtention d'un contenu courant (F1) généré à partir d'un ensemble de paramètres de contexte d'utilisation d'un équipement de restitution :
la réception (E421) d'une instruction (ins) émise par un dispositif électronique de restitution de contenu audio pour obtenir un contenu audio suivant (F2), le contenu audio suivant (F2) étant associé à un autre niveau d'information supérieur ou inférieur à celui du contenu audio (F1) ;
l'obtention (E421-E425, E511) du contenu audio suivant (F2) dont au moins une partie prend au moins en compte au moins un paramètre de contexte d'utilisation de l'équipement de restitution déterminé en fonction de l'instruction (ins) et de l'ensemble de paramètres de contexte d'au moins un contenu audio antérieur au contenu suivant (F2) ;
la transmission (E426) d'une donnée relative au contenu suivant à un dispositif électronique de restitution de contenu audio de l'équipement de restitution.

8. Dispositif électronique de fourniture de contenu audio dans le cadre un service numérique interactif comprenant :
un récepteur d'une instruction (ins) émise par un dispositif électronique de restitution de contenu audio d'un équipement de restitution dans le cadre dudit service ;
un dispositif d'obtention d'un contenu audio suivant (F2) destiné à être envoyé au dispositif électronique de restitution de contenu audio , au moins une partie dudit contenu audio suivant (F2) prenant en compte au moins un paramètre de contexte d'utilisation dudit équipement de restitution déterminé en fonction de l'instruction (ins) et de l'ensemble de paramètres de contexte d'un contenu antérieur audit contenu suivant (F2), le contenu audio suivant (F2) étant associé à un autre niveau d'information supérieur ou inférieur à celui du contenu audio (F1); et,
un transmetteur d'une donnée relative au contenu suivant au dispositif électronique de restitution de contenu audio de l'équipement de restitution.

9. Programme informatique comportant des instructions pour la mise en œuvre du procédé selon l'une quelconque des revendications 1 à 4 et/ou du procédé selon la revendication 7, lorsque ce programme est exécuté par un processeur.

10. Support d'enregistrement lisible par un ordinateur sur lequel est enregistré un programme d'ordinateur comprenant des instructions pour l'exécution des étapes d'un procédé selon l'une quelconque des revendications 1 à 4 ou selon la revendication 7.

## Patentansprüche

1. Verfahren zur Wiedergabe von Audioinhalt im Rahmen eines interaktiven digitalen Dienstes, implementiert durch eine elektronische Vorrichtung zur Wiedergabe von Audioinhalt, die in ein Gerät (110) zur Wiedergabe von Audioinhalt eingebettet ist, wobei das Verfahren nach dem Erhalt und der Wiedergabe eines Audioinhalts (F1) Folgendes beinhaltet:
Erkennung (E412) einer physischen Interaktion zwischen einem Benutzer und dem Wiedergabegerät; und als Reaktion auf die Erkennung
Erzeugung (E413) und Übertragung (E414) einer Anweisung (ins) an eine elektronische Vorrichtung (130, 110D) zur Bereitstellung von Audioinhalt, damit sie mindestens einen Verwendungskontextparameter des Wiedergabegeräts bestimmt, um einen nächsten Audioinhalt (F2) zu erhalten, der vom Benutzer im Rahmen des digitalen Dienstes erwartet wird, wobei die Übertragung der diskreten Anweisung die Wiedergabe (E416) des nächsten Audioinhalts (F2) auslöst, wobei der nächste Audioinhalt (F2) mit einer anderen Informationsebene assoziiert ist, die höher oder niedriger als die des Audioinhalts (F1) ist.

2. Wiedergabeverfahren nach Anspruch 1, wobei die Anweisung (ins) eine binäre Anweisung ist.

3. Wiedergabeverfahren nach einem der Ansprüche 1 bis 2, ferner beinhaltend die Übertragung, an die elektronische Vorrichtung zur Bereitstellung von Audioinhalt, einer Information, die mit der Anweisung (ins) assoziiert ist und den zum Zeitpunkt der Interaktion wiedergegebenen Audioinhalt (F1) darstellt.

4. Wiedergabeverfahren nach einem der Ansprüche 2 bis 3, wobei der Audioinhalt (F1) mit einer Informations- und Parametrierungsebene (LV) assoziiert ist, wobei der nächste Audioinhalt (F2) mit einer anderen Informationsebene assoziiert ist, die höher oder niedriger als die des Audioinhalts (F1) ist, wobei die Anweisung (ins) eine Anweisung ist, die so interpretiert wird, dass sie darauf abzielt, einen Inhalt mit einer höheren oder niedrigeren Informationsebene zu erhalten.

5. Wiedergabegerät, beinhaltend eine elektronische Vorrichtung zur Wiedergabe von Audioinhalt, wobei die Vorrichtung Folgendes beinhaltet:
eine Vorrichtung zur Wiedergabe eines Audioinhalts im Rahmen eines interaktiven digitalen Dienstes;
eine Einheit zur Erkennung einer Interaktion zwischen einem Benutzer und dem Wiedergabegerät;
eine Erzeugungseinheit, die so konfiguriert ist, dass sie bei Erkennung der Interaktion eine Anweisung für eine elektronische Vorrichtung zur Bereitstellung von Audioinhalt erzeugt, damit diese mindestens einen Verwendungskontextparameter des Wiedergabegeräts bestimmt, um im Rahmen des Dienstes einen nächsten Audioinhalt zu erhalten, wobei der nächste Audioinhalt mit einer anderen Informationsebene assoziiert ist, die höher oder niedriger als die des Audioinhalts ist; und
eine Einheit zur Übertragung der Anweisung an die elektronische Vorrichtung zur Bereitstellung von Audioinhalt.

6. Wiedergabegerät nach Anspruch 5, beinhaltend mindestens einen Knopf, der dazu konfiguriert ist, ein Signal zu erzeugen, das für die Aktivierung des Knopfes repräsentativ ist, und Mittel zum Weiterleiten des Signals an die Erkennungseinheit.

7. Verfahren zur Bereitstellung von Audioinhalt im Rahmen eines interaktiven digitalen Dienstes, wobei das Verfahren von einer elektronischen Vorrichtung zur Bereitstellung von Audioinhalt implementiert wird, wobei das Verfahren im Anschluss an den Erhalt eines aktuellen Inhalts (F1), der auf Grundlage eines Satzes Verwendungskontextparameter eines Wiedergabegeräts erzeugt wird, Folgendes beinhaltet:
Empfang (E421) einer Anweisung (ins), die von einer elektronischen Vorrichtung zur Wiedergabe von Audioinhalt gesendet wird, um einen nächsten Audioinhalt (F2) zu erhalten, wobei der nächste Audioinhalt (F2) mit einer anderen Informationsebene assoziiert ist, die höher oder niedriger als die des Audioinhalts (F1) ist;
Erhalt (E421-E425, E511) des nächsten Audioinhalts (F2), von dem mindestens ein Teil mindestens einen Verwendungskontextparameter des Wiedergabegeräts mindestens berücksichtigt, der abhängig von der Anweisung (ins) und dem Satz Kontextparameter mindestens eines dem nächsten Inhalt (F2) vorausgehenden Audioinhalts bestimmt wird;
Übertragung (E426) eines Datenelements, das sich auf den nächsten Inhalt bezieht, an eine elektronische Vorrichtung zur Wiedergabe von Audioinhalt des Wiedergabegeräts.

8. Elektronische Vorrichtung zur Bereitstellung von Audioinhalt im Rahmen eines interaktiven digitalen Dienstes, beinhaltend:
einen Empfänger einer Anweisung (ins), die von einer elektronischen Vorrichtung zur Wiedergabe von Audioinhalt eines Wiedergabegeräts im Rahmen des Dienstes gesendet wird;
eine Vorrichtung zum Erhalten eines nächsten Audioinhalts (F2), der dazu bestimmt ist, an die elektronische Vorrichtung zur Wiedergabe von Audioinhalt gesendet zu werden, wobei mindestens ein Teil des nächsten Audioinhalts (F2) mindestens einen Verwendungskontextparameter des Wiedergabegeräts berücksichtigt, der abhängig von der Anweisung (ins) und dem Satz Kontextparameter eines dem nächsten Inhalt (F2) vorausgehenden Inhalts bestimmt wird, wobei der nächste Audioinhalt (F2) mit einer anderen Informationsebene assoziiert ist, die höher oder niedriger als die des Audioinhalts (F1) ist; und
eine Einheit zur Übertragung eines Datenelements, das sich auf den nächsten Inhalt bezieht, an die elektronische Vorrichtung zur Wiedergabe von Audioinhalt des Wiedergabegeräts.

9. Computerprogramm, das Anweisungen umfasst, um das Verfahren nach einem der Ansprüche 1 bis 4 und/oder das Verfahren nach Anspruch 7 zu implementieren, wenn dieses Programm durch einen Prozessor ausgeführt wird.

10. Computerlesbares Speichermedium, auf dem ein Computerprogramm gespeichert ist, das Anweisungen zur Ausführung der Schritte eines Verfahrens nach einem der Ansprüche 1 bis 4 oder nach Anspruch 7 beinhaltet.

## Claims

1. Method for rendering audio content as part of an interactive digital service provided by an electronic device for rendering audio content embedded in an equipment (110) for rendering audio content, the method comprising, after obtaining and rendering an audio content (F1),
detecting (E412) a physical interaction between a user and the rendering equipment; and, in response to detection,
generating (E413) and transmitting (E414) an instruction (ins) to an electronic device (130, 110D) for delivering audio content so that it can determine at least one usage context parameter of the rendering equipment to obtain a next audio content (F2)expected by the user as part of the digital service, transmission of the discrete instruction triggering rendering (E416) of the next audio content (F2), the next audio content (F2) being associated with another information level higher or lower than that of the audio content (F1).

2. Rendering method according to Claim 1, wherein the instruction (ins) is a binary instruction.

3. Rendering method according to either one of Claims 1 and 2, further comprising transmitting information that is associated with the instruction (ins) and represents the audio content (F1) rendered at the time of the interaction to the electronic device for delivering audio content.

4. Rendering method according to either one of Claims 2 and 3, wherein the audio content (F1) is associated with an information and setting level (LV), the next audio content (F2) being associated with another information level higher or lower than that of the audio content (F1), wherein the instruction (ins) is an instruction interpreted as aimed at obtaining a content with a higher or lower information level.

5. Rendering equipment comprising an electronic device for rendering audio content, the device comprising:
a device for rendering an audio content as part of an interactive digital service;
a detector of an interaction between a user and the rendering equipment;
a generator configured to, upon detection of the interaction, generate an instruction to an electronic device for delivering audio content so that it can determine at least one usage context parameter of the rendering equipment to obtain a next audio content as part of said service, the next audio content being associated with another information level higher or lower than that of the audio content; and,
a transmitter of the instruction to said electronic device for delivering audio content.

6. Rendering equipment according to Claim 5, comprising at least one button configured to generate a signal representative of activation of said button, and routing means to route said signal to said detector.

7. Method for delivering audio content as part of an interactive digital service, the method being carried out by an electronic device for delivering audio content, the method comprising, after obtaining a current content (F1) generated from a set of usage context parameters of a rendering equipment:
receiving (E421) an instruction (ins) output by an electronic device for rendering audio content to obtain a next audio content (F2), the next audio content (F2) being associated with another information level higher or lower than that of the audio content (F1);
obtaining (E421-E425, E511) the next audio content (F2), at least some of which at least takes into account at least one usage context parameter of the rendering equipment determined on the basis of the instruction (ins) and the set of context parameters of at least one audio content prior to the next content (F2);
transmitting (E426) a datum relating to the next content to an electronic device for rendering audio content of the rendering equipment.

8. Electronic device for delivering audio content as part of an interactive digital service, comprising:
a receiver of an instruction (ins) output by an electronic device for rendering audio content of a rendering equipment as part of said service;
a device for obtaining a next audio content (F2) to be sent to the electronic device for rendering audio content, at least some of said next audio content (F2) taking into account at least one usage context parameter of said rendering equipment determined on the basis of the instruction (ins) and the set of context parameters of a content prior to said next content (F2), the next audio content (F2) being associated with another information level higher or lower than that of the audio content (F1); and,
a transmitter of a datum relating to the next content to the electronic device for rendering audio content of the rendering equipment.

9. Computer program comprising instructions for carrying out the method according to any one of Claims 1 to 4 and/or the method according to Claim 7 when this program is executed by a processor.

10. Computer-readable recording medium on which is recorded a computer program comprising instructions for performing the steps of a method according to any one of Claims 1 to 4 or according to Claim 7.
